# EUROPEAN PATENT APPLICATION

(11) **EP 1 902 612 A2**
(43) Date of publication of application: **26.03.2008**
(21) Application number: 07150285.0
(22) Date of filing: 21.12.2007
(51) Int. Cl.: A01G 17/14

(54) **Supporting pole for vineyards, agricultural applications or for exteriors, and relative production method**

(30) Priority: 27.12.2006 IT UD20060276
(71) Applicant: Valente Pali Precompressi SpA, 35011 Campodarsego (PD) (IT)
(72) Inventor: Valente, Alberto, 35010, Borgoricco (PD) (IT)
(74) Representative: Petraz, Gilberto Luigi

(57) **Abstract**

Supporting pole for vineyards, agricultural applications, or for exteriors, comprising an oblong structure (11) made in a metallic material with an anti-corrosion treatment or with anti-corrosion properties. The oblong structure (11) is lined or covered, in its lower part, with a further layer (13) of anti-corrosion material selected between one or the other of bitumen, a paint or a plastic based material.

## Description

### FIELD OF THE INVENTION

The present invention concerns a supporting pole for vineyards, for other agricultural applications and more generally for any application for exteriors. The pole according to the present invention is able to be stuck with its lower part into the ground and thus to constitute, with the protruding part, a vertical support element.

### BACKGROUND OF THE INVENTION

Poles are known, each consisting of an oblong structure having a lower part which is normally stuck into the ground. In the field of vine-growing, known poles, disposed aligned in one or more rows, constitute the elements of vertical support between which metal cables are strung which act as horizontal supports.

Known poles are made either of concrete or of metal, according to specific applications. Metal poles, lighter and more manageable, have the disadvantage however that they are subject to heavy corrosion, especially in the lower part, directly in contact with the ground into which it is stuck, due to the chemical-physical aggressiveness of the latter and the atmospheric agents.

One example of a metal supporting pole is the one described in the Italian patent for an industrial invention n. 1.334.907 granted to the present Applicant.

Other examples of supporting poles that are treated with a galvanizing layer are disclosed, for example, in EP-A-1.629.709, EP-A-1.232.684 and EP-A-1.661.451.

However, in some conditions, also the galvanizing treatment is not enough for avoiding an early corrosion of the part of the pole that is inserted in the ground.

Purpose of the present invention is to achieve, in a simple, quick and economical manner, a supporting pole which is light and manageable and which at the same time is not subject to phenomena of corrosion, at least in its lower part.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a supporting pole according to the present invention comprises an oblong metallic structure having a lower part able to be stuck into the ground.

Said metallic oblong structure is made of steel, preferably galvanized steel, galvanized cold or preferably hot, or of stainless steel, or of the steel commonly known as COR-TEN.

However, according to the invention, the metallic structure may be obtained substantially with any metallic material or metallic alloy that is coated, treated or otherwise provided itself with anti-corrosion properties.

According to the invention, the oblong structure, in its lower part, is lined or covered with a further layer of anti-corrosion material, so obtaining a double-layer protection at least in the part of the pole intended to be inserted in the ground.

The pole obtained according to the present invention is light and manageable and is not subject to phenomena of corrosion, in particular in its lower part which will come into direct contact with the ground.

Advantageously the anti-corrosion material is a non-toxic and environmentally friendly type.

The anti-corrosion material usable for the further protective layer can be a bitumen-based material, such as tar or epoxy bitumen, or a plastic-based material.

According to a variant, the anti-corrosion material is a paint, for example a spray-on paint. In a further variant, the coating is obtained by immersion of the pole in an anti-corrosion paint.

The oblong structure can be solid, of the tubular type, closed or open, such as for example the one described in the above-cited Italian patent n. 1.334.907.

A simple, quick and economical method to make the pole according to the present invention provides a first step in which the oblong structure is made, for example in galvanized steel, or in stainless steel, or in COR-TEN steel, and a second step in which the lower part of the oblong structure is covered or lined with a further anti-corrosion material, for example bitumen, plastic-based material or a paint, advantageously by applying it and then drying a spray-on paint.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a front view of a pole according to the present invention; and
- fig. 2 is a section from II to II of fig. 1.

### DETAILED DESCRIPTION OF A PREFERENTIAL FORM OF EMBODIMENT

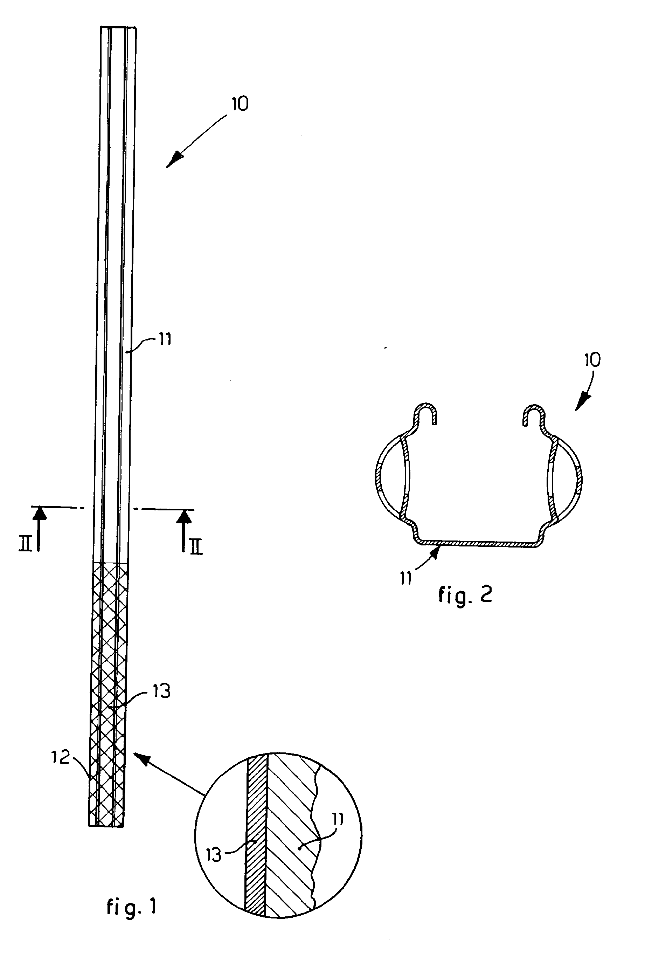

With reference to fig. 1, a supporting pole 10 according to the present invention comprises an oblong structure 11, having for example an overall length comprised between about 2 and 3 meters. To give an example, the oblong structure 11 is of the type described in the above-cited Italian patent n. 1.334.907. and has the cross section shown in fig. 2. The oblong structure 11 is advantageously, but not exclusively, made of galvanized steel, galvanized cold or preferably hot, or of stainless steel, or of COR-TEN steel. In the case of hot galvanizing, the layer of zinc is comprised between about 55 and 50 micron, according to the norm UNI EN ISO 1461.

However, the oblong structure 11 may be obtained with any metallic material or metallic alloy which is treated, for example coated, with an anti-corrosion material or which has intrinsic anti-corrosion properties.

The oblong structure 11 comprises a lower part 12 (fig. 1) which is covered by a further layer 13 of anti-corrosion material, as is shown in the enlarged detail of the section of the pole 10 in fig. 1.

The layer 13 is continuous and completely covers the whole surface, even that facing towards the inside of the cavity of the oblong structure 11, advantageously for about a third of the overall length of the oblong structure 11, starting from the bottom of the latter, as can be seen in fig. 1.

The anti-corrosion material usable for the further layer can be a bitumen-based material, such as tar or epoxy bitumen, or plastic, or a paint comprising the anti-corrosion material, in powder form or sprayed on. In the case of a spray-on application, a drying step is also provided for the layer 13, so that, at the end of the drying treatment, the thickness is about 20 micron per face; this solution offers a considerable anti-corrosion protection to the oblong structure 11.

It is clear that modifications and/or additions of parts and/or steps may be made to the supporting pole for vineyards, agricultural applications or for exteriors, and the relative method, as described heretofore, without departing from the field and scope of the present invention.

## Claims

1. Supporting pole for vineyards, agricultural applications or for exteriors, comprising an oblong structure (11) made in a metallic material with an anti-corrosion treatment or with anti-corrosion properties, **characterized in that** said oblong structure (11) is lined or covered, in its lower part, with a further layer (13) of anti-corrosion material selected between one or the other of bitumen, a paint or a plastic based material.

2. Pole as in claim 1, **characterized in that** said metallic material is selected between stainless steel, galvanized steel or COR-TEN steel.

3. Pole as in claim 1, **characterized in that** said further anti-corrosion layer (13) is disposed on about one third of the overall length of said oblong structure (11) starting from the bottom.

4. Pole as in any claim hereinbefore, **characterized in that** said oblong structure (11) has a hollow cross section.

5. Pole as in claim 4, **characterized in that** the profile of said cross section is open or closed.

6. Method to make a supporting pole for vineyards, agricultural applications or for exteriors, comprising an oblong structure (11) made in a metallic material with an anti-corrosion treatment, **characterized in that** it comprises a first step in which said oblong structure (11) is made and a second step in which the lower part (12) of said oblong structure (11) is lined or covered by a further layer (13) of anti-corrosion material, selected between one or the other of bitumen, a paint or a plastic based material, so as to obtain a double-layer anti-corrosion protection.

7. Method as in claim 6, **characterized in that** said oblong structure (11) is made of steel subjected to a galvanizing treatment.

8. Method as in claim 6, **characterized in that** said oblong structure (11) is made of stainless steel.

9. Method as in claim 6, **characterized in that** said oblong structure (11) is made of COR-TEN steel.

10. Method as in claim 6, **characterized in that** said further layer (13) is made by spray-painting, or by immersion into, said anti-corrosion material.

11. Method as in claim 10, **characterized in that** said further layer (13), after said painting, is subjected to drying, so that at the end of said second step, the thickness of said layer (13) is at least about 20 micron.
